(19) Europäisches Patentamt
European Patent Office
Office européen des brevets

(11) Publication number: **0 275 051**
**A2**

(12) # EUROPEAN PATENT APPLICATION

(21) Application number: 88100202.6

(51) Int. Cl.⁴: C08F 283/12 , C09D 3/00

(22) Date of filing: 08.01.88

(30) Priority: 15.01.87 US 3650
28.01.87 US 7973
16.10.87 US 109415

(43) Date of publication of application:
20.07.88 Bulletin 88/29

(84) Designated Contracting States:
AT BE CH DE ES FR GB IT LI LU NL SE

(71) Applicant: THE GLIDDEN COMPANY
900 Huntington Building 925 Euclid Avenue
Cleveland Ohio 44115(US)

(72) Inventor: Woo, James T.K.
6551 Spieth Road Medina 4670 Royalwood
North Royalton Ohio(US)
Inventor: Marcinko, Richard M.
6551 Spieth Road Medina 4670 Royalwood
North Royalton Ohio(US)

(74) Representative: Baillie, Iain Cameron et al
c/o Ladas & Parry Isartorplatz 5
D-8000 München 2(DE)

(54) **Acrylic modified silicone resins.**

(57) The invention pertains to modified silicone polymers particularly useful in protective coatings including powder coatings. The polymeric composition is produced by in-situ copolymerization of ethylenic monomers, including acrylic and hydroxylated monomers or glycidyl monomers, in the presence of silicone resin.

EP 0 275 051 A2

Xerox Copy Centre

# ACRYLIC MODIFIED SILICONE RESINS

## BACKGROUND OF THE INVENTION

This invention pertains to acrylic modified silicone resins useful in power resins and particularly to a process and composition related to in-situ copolymerization of monomers in the presence of silicone resins.

Acrylic resins useful in power coatings are known to exhibit good weathering properties if the acrylic copolymer does not contain major amounts of copolymerized styrene. U.S. 4,446,259 and U.S. 4,472,484 disclose blends of acrylic binder and silicone resin. Acrylic copolymers of silicone resin should provide considerably improved weathering properties and should offset other film property deficiencies of silicon resins. However, attempting to coreact acrylic copolymer with silicone resins is difficult to achieve in practice since the reaction is difficult to control and often results in useless cross-linked polymers known as gels. The reaction is difficult to control due to hydroxyl groups on the acrylic polymer as well as the hydroxyl groups on the silicone polymer. For instance, a hydroxylated acrylic copolymer prepared in solvent and subsequently reacted with hydroxyl or alkyl ether groups in silicone resin either gelled upon coreaction or gelled during the process of stripping solvent off the resulting product.

It now has been found that in-situ polymerization of ethylenically unsaturated monomers, including (a) acrylic and hydroxylated monomers, or (b) glycidyl monomers in the presence of silicone resin containing hydroxyl and/or alkyl ether groups advantageously produces a fluid non-gelled copolymer, believed to be a graft copolymer, to produce a very useful polymeric binder for powder coatings exhibiting superior weathering and similarly improved film integrity properties. These and other advantages of this invention will become more apparent by referring to the detailed description of the invention and the illustrative examples.

## SUMMARY OF THE INVENTION

Briefly, the invention pertains to a process and resulting composition produced by in-situ copolymerization of ethylenically unsaturated monomers, including acrylic monomers and hydroxylated monomers, in the presence of silicone resin containing hydroxyl groups or lower alkyl groups to produce a stabilized, non-gelled acrylic-silicone copolymer mixture. The invention further pertains to in-situ copolymerization of acrylic and glycidyl monomers in the presence of such silicone resin to produce a stabilized non-gelled acrylic-silicone copolymer mixture. The in-situ polymerization processes can be in bulk (solvent-free) or in the presence of organic solvent which can be subsequently stripped from the resulting polymer mixture. The polymer can be combined with other components to produce a clear or pigmented binder system for powder coatings.

## DETAILED DESCRIPTION OF THE INVENTION

The process and composition of this invention pertains to the in-situ copolymerization of ethylenically unsaturated monomers including (a) acrylic and hydroxylated monomers or (b) glycidyl monomers, in the presence of silicone resin.

Referring first to the ethylenically unsaturated monomers, ethylenic monomers contain carbon-to-carbon unsaturation and include vinyl monomers, acrylic monomers, allylic monomers, acrylamide monomers, and mono-and dicarboxylic unsaturated acids. Vinyl monomers include vinyl esters, vinyl acetate, vinyl propionate, vinyl butyrates, vinyl benzoates, vinyl isopropyl acetates and similar vinyl esters; vinyl halides such as vinyl chloride, vinyl fluoride, and vinylidene chloride; vinyl aromatic hydrocarbons such as styrene, methyl styrenes and similar lower alkyl styrenes, chlorostyrene, vinyl toluene, vinyl naphthalenes, divinyl benzoate, and cyclohexene; vinyl aliphatic hydrocarbon monomers such as alpha olefins such as ethylene, propylene, isobutylene, and cyclohexene as well as conjugated dienes such as 2,3 butadiene, methyl-2-butadiene, 1,3-piperylene, 2,3 dimethyl butadiene, isoprene, cylopentadiene, and dicyclopentadiene; and vinyl alkyl ethers such as methyl vinyl ether, isopropyl vinyl ether, n-butyl vinyl ether, and isobutyl vinyl ether. Acrylic monomers include monomers such as low alkyl esters of acrylic or methacrylic acid having an alkyl ester portion containing between 1 to 12 carbon atoms as well as aromatic derivatives of acrylic and methacrylic acid. Useful acrylic monomers include, for example, acrylic and methacrylic acid, methyl acrylate and methacrylate, ethyl acrylate and methacrylate, butyl acrylate and methacrylate, propyl acrylate

and methacrylate, 2-ethyl hexyl acrylate and methacrylate, cyclohexyl acrylate and methacrylate, decyl acrylate and methacrylate, isodecylacrylate and methacrylate, benzyl acrylate and methacryalte, and various reaction products such as butyl, phenyl, and cresyl glycidyl ethers reacted with acrylic and methacrylic acids, hydroxyl alkyl acrylates and methacrylates such as hydroxyethyl and hydroxypropyl acrylates and methacrylate, as well as amino acrylates and methacrylates. Acrylic acids include acrylic and methacrylic acid, ethacrylic acid, alpha-chloroacrylic acid, alphacycanoacrylic acid, crotonic acid, and beta-acryloxy propionic acid. Acrylic monomers comprise between 30% and 95% by weight of the copolymerized ethylenic monomers in accordance with this invention. N-alkylol amides are acrylamides or methacrylamides such as N-methylol acrylamide, N-ethanol acrylamide, N-propanol acrylamide, N-methylol methacrylamide, N-ethanol methacrylamide, and similar alkyl acrylamide or methacrylamide monomers containing methyl, ethyl, propyl, n-butyl or iso-butyl alkyl groups.

In acccordance with one aspect this invention, hydroxyl monomers are included at a level above 25%, and preferably between 1% and 50% by weight of the total copolymerized monomers to provide subsequent coreaction with the silicone resin. Hydroxyl functional monomers are hydroxy containing ethylenically unsaturated monomers including hydroxy alkyl acrylates such as 2-hydroxy ethyl acrylate and methacrylate, 2-hydroxypropyl acrylate and methacrylate, and similar hydroxy alkyl acrylates. Other hydroxy containing monomers such as vinyl benzyl alcohol or vinyl alcohol can also be used.

In accordance with another aspect of this invention, glycidyl monomers are oxirane monomers characteristically containing oxirane functionality:

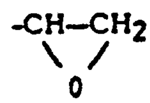

in addition to pendant ethylenic double bond unsaturation. Glycidyl monomers include for instance acrylic, methacrylic, or vinyl monomer derivatives of glycidyl and include, for example, glycidyl acrylate, glycidyl methacrylate and similar lower alkyl acrylates, and allyl glycidyl ether. The glycidyl monomers can be copolymerized with the other ethylenically unsaturated monomers in the presence of silicone resin in accordance with this invention.

Referring now to the silicone resins useful in this invention, silicone resins are based on a chemical backbone structure comprising alternate silicon and oxygen atoms, where methyl groups primarily or other lower alkyl groups or phenyl groups are attached to the silicon atoms, provided that hydroxyl groups (silanol groups) or lower alkyl ether (methoxy silane groups) are available and attached to silicon atoms for curing purposes. Silcone resins are prepared from organochlorosilanes such as methyltrichlorosilane, phenyltrichlorosilane, and dimethyldichlorosilane, which can be coreacted with an organc halide such as methyl chloride or chlorobenzene in the presence of silicon and copper catalyst to produce chlorosilanes which can be further reacted with water to form hydroxysilanes and dehydrolysis to eventually organopolysiloxanes (silicones). Silicone resin have the generalized structure:

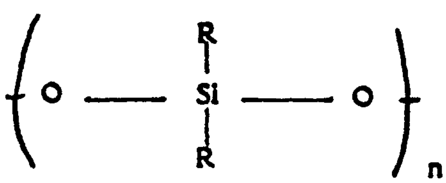

where R is a monovalent organic radical.
In most commercial silicones the R = methyl, but can include lower alkyl, fluoroalkyl, phenyl, vinyl and as part of the silicone resin polymer can include hydrogen, chlorine, alkoxy, ocyloxy, or alkylamino groups; and where n represents monofuntional, difunctional, trifunctional, and quadrafunctional monomer units in the silicone polymer. Useful silicone resins in accordance with this invention have a number average molecular weight above 500 and preferably between 600 and 8,000 and have on an average more than 1, preferably 2, hydroxyl(silanol) groups and/or alkyl ether (methoxy silane) groups per silicone molecule and preferably between 2 and 3 (including fractions) silanol and/or methoxy silanol groups per silicone molecule. Molecular weights can be determined by gel permeation chromatography (GPC) in accordance with ASTM D3016-72, ASTM D3536-76, ASTM D3593-80, and/or ASTM 3016-78.

Preferably siloxane component is a cyclic silanol having at least about two SIOH groups per molecule and wherein some of the non-hydroxy valence bonds of the silanol contribute to the cyclic structure.

Preferred polyfunctional silicones include those set forth in U.S. Pat. No. 3,912,670 and 4,107,148, both incorporated herein by reference. The most preferred hydroxy functional silicone is Z-6018 (Dow Corning) having a molecular weight of about 600 and a theoretical fomula:

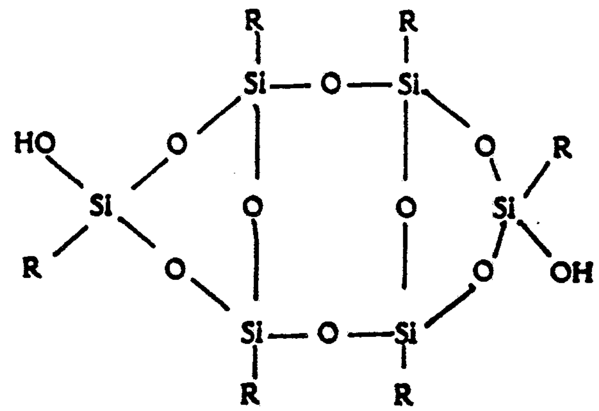

where R is independently lower alkyl or phenyl groups and particularly methyl, ethyl, and phenyl groups. Physical properties thereof are as follows:

Appearance Flaked solid
Theoretical Silicone Content, wt. % 96.6
Nonvolatile Content, percent 98.0
Volatility, 1.5 gms for 3 hrs at 482 F (250 C), percent 4.5
Hydroxyl Content
weight percent total 6.4
hydroxy no. 211
weight percent free 0.5
Specific Gravity at 77 F (25 C) 1.23
Durran Melting Point, degrees 185 F (85 C)

The desired crystallinity, tack temperatures and flow properties are derived from a rigid diacid, a multifunctional glycol and hydroxy-functional cyclic siloxanes. It is believed, without being bound thereto, that the advantageous properties of the instant powder coatings result in part from a controlled linearity resulting from the use of rigid diorganic acids and the inherent structure provided by the cyclic siloxanes having terminal hydroxyl group Si(R)-OH functionality and in part from the contribution of a high silicon content. The preferred siloxane is Z-6018 and self-condensation products thereof. Such products may contain up to twelve units of the above-indicated siloxane and have molecular weights of from about 600 to about 8,000.

In accordance with this invention, the composition comprises on a weight basis between 30% and 95% in-situ copolymerized acrylic polmer with the balance being silicone resin. The ethylenically unsaturated monomers comprise by weight based on total copolymerized monomers between 30% and 95% acrylic monomer, between 1% and 50% hydroxy monomers, with the balance being other ethylenically unsaturated monomers.

Referring now to the process of this invention, silicone resin is dispersed into an organic solvent such as aromatic hydrocarbons such as xylene, toluene, benzene, or aliphatic hydrocarbons or derivatives thereof such as chlorinated hydrocarbons, esters or ketones. To provide solubility for the subsequent addition of ethylenic monomers the aliphatic or aromatic hydrocarbons can be mixed with alkyl alcohols such as methanol, ethanol, propanol, butanol as well as other solvents such ethylene glycol monobutyl ether, ethylene glycol monobutyl ether acetate, and hexane.

The solvated silicone resin is the heated to temperatures preferably between about 50°C and 150°C, depending on the solvents and monomers as well as the polymerization initiator and the stage of the copolymerization of monomers. The ethylenically unsaturated monomers are then added to the heated solvated silicone resin over a period of time to effect in-situ copolymerization of the monomers in the presence of silicone resin. Suitable initiators for promoting copolymerization of the monomers include, for example, hydrogen peroxide, benzoyl peroxide, and dicumyl peroxide. The perioxide catalyst can be effectively coupled with a reducing agent such as an alkali metal sulfite, bisulfite, or metabisulfite, or hydrosulfite or hydrazine. Other suitable initiators include organic or inorganic azo catalysts, such as

azodiisobutyronitrile, azodiisobutyramide, or diethyl azodiisobutyrate. Examples of other suitable azo catalysts include dimethyl or dibutyl azodiisobutyrate, azobis(alpha,v-dimethylvaleronitrile), azobis(alpha-methylbutyronitrile), azo-bis(alphamethylvaleronitrile), dimethyl or diethyl azobismethylvalerate, and the like. Preferred such initiators comprise the persulfates, such as potassium persulfate, sodium persulfate, ammonium persulfate, and the like. Another useful class of initiators comprises percarbonates, such as diisopropyl percarbonate, and the like. Another useful class of initiators for this in situ polymerization comprises organic peroxides. One group of suitable peroxides comprises diacyl peroxides, such as benzoyl peroxide, lauroyl peroxide, acetyl peroxide, caproylperoxide, butyl perbenzoate, 2,4-dichloro benzoyl peroxide, p-chlorobenzoyl peroxide, and the like. Another group comprises ketone peroxides, such as methyl ethyl ketone peroxide and the like. Another group comprises alkyl hydroperoxides such as t-butyl hydroperoxide, and the like.

After the copolymerization of the monomers is completed, the in-situ formed polymeric mixture comprises acrylic copolymer and silicone resin, and believed to include graft copolymer of silicone resin. The solvent can be stripped off of the polymeric mixture without causing gelation and to provide an exceptionally good binder useful in powder coatings.

The acrylic-silicone binder of this invention can be thoroughly and uniformly mixed with raw batch ingredients by homogenizing the binder, pigmentary solids, plasticizers and other componens to uniformly blend the resinous binder with the pigmentary solids. Pigments can ordinarily include opacifying pigments such as titanium dioxide, zinc oxide, leaded zinc oxide, titanium calcium, as well as tinting pigment such as carbon black, yellow oxides, brown oxides, tan oxides, raw and burnt sienna or umber, chromium oxide green, phthalocyanine green, phthalonirile blue, ultramarine blue, cadmium pigments, chromium pigments, and the like. Filler pigments such as clay, silica, talc, mica, woolastonite, wood flower and the like can be added. The raw bath ingredients can be thoroughly mixed in a high intensity mixer such as a frustroconical agitator whereby the materials are discharged in a uniform mixture. The high intensity mixer discharges the batch components to a heated screw extruder. The extrudate emerges from the extruder as a ribbon of less than about 1/16 inch thickness which passes onto a water cooled stainless steel conveyor belt whereby the plastic ribbon extrudate fully hardens. The cooled extrudate then passes through a mechanical commuter discharged at the end of the cooled stainless steel belt to efficiently break the fragile brittle ribbon into very small flakes. The small flakes are then discharged onto a cooled mill, such a a hammer mill, to grind the small particles onto powder paint of less than 325 mesh and preferably passing a 200 mesh U.S. Standard sieve screen whereupon the powder can be further classified into particle size if desired.

The powder paints in accordance with this invention can be applied to a steel panel substrate and moderately heated between temperatures of about 80°C and 100°C to obtain desirable flow out.

The merits of this invention are further illustrated by the following illustrative examples where percentages are weight percent and temperatures are °C, unless otherwise indicated.

EXAMPLE 1

Acrylic powder resin with silicone resin cooked in at the end.

To a 5 liter 4-necked round bottom flask was charged 750 g. of toluene. To these 4 necks were fitted with a water-cooled condenser, a mechanical stirrer, a thermometer, a nitrogen inlet and an addition funnel. The toluene was heated to about 110°C and a monomer mixture consisting of the following.

| | Grams |
|---|---|
| hydroxyethyl methacrylate | 682 |
| methyl methacrylate | 1068 |
| styrene | 182 |
| methacrylic acid | 45 |
| butyl acrylate | 296 |
| mercapto ethanol | 23 |
| Azobis initiator (VAZO 64) | 45 |

**2-methyl-2,2'-azobis propanenitrile**

was slowly added in 3 hours. The temperature drifted to 114°C. After the monomer addition, the polymerization mixture was held for 3 hours at 114-116°C and cooled for the night. The following day, the polymerization mixture was heated to 108°C and 758 grams of a silicone resin Z 6018 (from Dow-Corning) was added. The temperature dropped to 85°C, and heating was resumed to 116°C, reflux started, and there was water droplets forming from the etherification reaction between the acrylic copolymer and the silicone resin. Heating was continued at 116°C for 4 hours, and then solvent was vacuum stripped off. Towards the end of stripping, temperature was increased to 133-140°C. Resin becomes very thick and appeared to be gelled. The tack temperature of the resin was 231°F and viscosity at 200°C with ICI cone and plate viscometer was off scale.

EXAMPLE 2

Acrylic powder resin with acrylic monomers grafted onto silicone resin.

Using the procedure similar to Example 1, 750 g. of toluene was charged into the reaction flask, and heated to 85°C. 758 g. of solid silicone resin (A 6018) was added to the hot toluene in 10 minutes. After the addition, the solution was heated to reflux, approximately 108°C. A monomer mixture consisting of 682 g. of hydroxyethyl methacrylate, 1068 g. of methyl methacrylate, 182 g. of styrene, 296 g. of butyl acrylate, 45 g. of methacrylic acid, 45 g. of VAZO 64 and 23 g. of mercapto ethanol was added in 3 hours. During the addition, 4.5 ml of water was collected. After the monomer addition, the reaction mixture was held for 3 hours at 113°C and cooled for the night. The following day, the reaction mixture was heated and a vacuum of 22 inches was used to strip off the solvent. The temperature towards the end of the stripping was rasied to 137°C, gellation did not occur. Viscosity at 200°C with the ICI cone and plate viscometer was 87 p., tack temperature 213°F, AN 12.1.

EXAMPLE 3

Acrylic powder resin from hydroxy-ethyl methacrylate, ethyl acrylate.

To a 5 liter round-bottomed 4 necked flask was charged 750 g. of toluene. To these 4 necks were fitted with a water-cooled condenser, a mechanical stirrer, a thermometer, a nitrogen inlet and an addition funnel. The toluene was heated to about 110°C, and a monomer mixture consisting of the following:

| | Grams |
|---|---|
| Hydroxyethyl methacrylate | 675 |
| Methyl methacrylate | 967.5 |
| Styrene | 202.5 |
| Ethyl Acrylate | 405 |
| Methacrylic acid | 22.5 |
| VAZO 64 | 45 |
| Mercapto ethanol | 22.5 |

was slowly added in 3 hours. The temperature drfited to 112°C. After the monomer addition, the polymerization mixture was held for 3 hours at 112-116°C. After the hold, a vacuum was applied to strip off solvent. The temperature climbed to 125°C. The vicous resin was then poured onto an aluminium foil and let cool to room temperature. Viscosity of resin: 34 poise at 200°C, 170 poise at 175°C, off scale at 150°C. Viscosity determined on a ICI Cone-Plate viscometer: tack temperature 193°F, hydroxy content: 4.3% (equivalent to 141.9 hydroxyl number. Calculated theoretical hydroxyl number is 129.5). Acid number 7.1.

EXAMPLE 4

Acrylic powder resin from hydroxyethyl methacrylate, butyl acrylate., etc.

750 g. of toluene was charged into a 5 liter 4-necked round bottom flask. Through these 4 necks were placed water-cooled condenser, mechanical stirrer, nitrogen inlet and a thermometer. The toluene was heated to 110°C before a monomer mixture of the following:

| | Grams |
|---|---|
| hydroxyethyl methacrylate | 675 |
| methyl methacrylate | 967 |
| Styrene | 203 |
| butyl acrylate | 405 |
| methacrylic acid | 23 |
| mercaptoethanol | 23 |
| VAZO 64 | 45 |

was added in 3 hours. At the end of the three hour addition, temperature increased to 115°C. The reaction mixture was held at 115°-119°C for three more hours, and heating was turned off, and 15-20" of vacuum was used to strip off most of the solvent. Towards the end of the strip, heating was turned back on, so that temperature at the end of strip is 128°C. The viscous resin is then dropped onto an aluminum foil. ICI Cone and Plate viscosity is 20 poise at 200°F, tack temperature is 185°F, acid number is 7.8, number average molecular weight (Mn) as determined by gel permeation chromatography is 4470, weight average molecular weight (Mw) is 10300 and Mw/Mn = 2.3.

EXAMPLE 5

Grafted silicone-acryulic powder resin from HEMA-BA.

To a 5-liter 4 necked round bottom flask was charged 750 g. of toluene. 758 g. of silicone resin A-6018 from Dow Corning Company was then added. The structure of the Z-6018 is believed to be as shown on preceding page 5. Molecular weight of Z-6018 is 1300, and therefore it is not a monomeric material. The silicone resin solution is now heated to 105°C and a monomer mixture consisted of the following:

| | Grams |
|---|---|
| hydroxyethylmethacrylate | 675 |
| methyl methacrylate | 967 |
| Styrene | 203 |
| butyl acrylate | 405 |
| methacrylic acid | 23 |
| mercapto ethanol | 23 |
| VAZO 64 | 45 |

was slowly added to the polymerization medium. After 2 hours of addition, 4.4 ml. of water was collected and the reaction medium was foaming extensively. Heating was reduced. After another hour, addition of monomer was completed and 5 ml of water was collected. The polymerization mixture was held at 114-118°C for 3 hours. Heating was stopped and a vacuum was applied to strip off solvent. The viscous resin was then poured onto an aluminum foil. The ICI viscosity is 36 poise at 200°C. Tack temperature is 193°F, AN: 10.1, number average molecular weight is 4060, weight average molecular weight is 17800, Mw/Mn = 4.4.

EXAMPLE 6

Silicone-acrylic powder resin from HEMA-BA

To a 5 liter 4 necked round bottom flask was charged 750 g. of toluene. The flask was equipped with a water-cooled condenser, a mechanical stirrer, a nitrogen inlet and a thermometer. The toluene was heated to reflux at about 109°C. at that time, a monomer mixture consisting of the following:

| | Grams |
|---|---|
| hydroxyethylmethacrylate | 675 |
| methyl methacrylate | 967 |
| Styrene | 203 |
| butyl acrylate | 405 |
| methacrylic acid | 23 |
| mercapto ethanol | 23 |
| VAZO 64 | 45 |

was added in 3 hours. At the end of the monomer addition, temperature was 115°C, and the polymerization mixture was held at 113-117°C for 3 more hours. At the end of the hold, 758 g. of silicone resin Z-6018 was added and heated to reflux. 10 ml. of water was collected in a Dean-Stark trap in about 1½ hour. At that time, the temperature was cooled to below reflux and a vacuum of 20" was applied to remove volatile. When the volatile slowed down in coming over, the viscous resin was poured onto an aluminum foil. The tack temperature is 190°F, AN: 8.6, number average molecular is 3810, weight average molecular weight is 12,800, Mw/Mn = 3.4.

EXAMPLE 7

Acrylic powder resin with hydroxypropyl methacryalate (HPMA) ethyl acrylate

This polymer was prepared similarly as described in Example 3. The ingredients are

| | Grams |
|---|---|
| Toluene | 750 |
| hydroxypropyl methacrylate (HPMA) | 675 |
| methyl methacrylate (MMA) | 968 |
| styrene | 203 |
| ethyl acrylate (EA) | 405 |
| methacrylic acid (MAA) | 22.5 |
| mercapto ethanol | 22.5 |
| VAZO 64 | |

The ICI cone and plate viscosity is 20 poise at 200°C, 95 poise at 175°C. Tack temperature of resin is 183°F, AN 7.8, hydroxy number: 117.

EXAMPLE 8

Acrylic resin with HPMA-BA

The resin is made similarly to that of Example 4. The ingredients used are

| | Grams |
|---|---|
| Toluene | 750 |
| HPMA | 755 |
| MMA | 1068 |
| Styrene | 205 |
| BA | 296 |
| MAA | 23 |
| Mercapto ethanol | 23 |
| VAZO 64 | 45 |

The viscosity (ICI) of resin is 26 p. at 200°C. Tack temperature is 197°F, AN 7. Number averge molecular weight is 5130, and weight averge molecular weight is 10500, Mw/Mn = 2.05.

EXAMPLE 9

Grafted silicone-arylic powder resin from HPMA-BA

This resin is prepared similarly to that in Example 3. The following ingredients were used.

| | Grams |
|---|---|
| Toluene | 750 |
| Z6018 | 758 |
| HPMA | 755 |
| MMA | 1068 |
| Styrene | 205 |
| MAA | 23 |
| BA | 296 |
| Mercapto ethanol | 23 |
| VAZO 64 | 45 |

The ICI viscosity of resin is 18 poise at 200°C, 119 poise at 175°C, AN: 8 and tack temperature 193.5°F.

EXAMPLE 10

Silicone acrylic powder resin from HPMA-BA.

The resin is made similarly to that in Example 6.

| | Grams |
|---|---|
| Toluene | 750 |
| HPMA | 755 |
| MMA | 1068 |
| | Grams |
| Styrene | 205 |
| MAA | 23 |
| BA | 296 |
| Mercapto ethanol | 23 |
| VAZO 64 | 45 |
| Z-6018 | 758 |

The ICI viscosity of resin is 18 p. at 200°C, 103 poise at 175°C and 365 poise at 150°C. Tack temperature is 200°F, AN 7.7 and hydroxyl number is 99.

EXAMPLE 11

Acrylic powder resin with HPMA

Similarly to example 4, the following polymer was prepared from:

| | Grams |
|---|---|
| Toluene | 750 |
| HPMA | 581 |
| MMA | 1140 |
| BA | 344 |
| Styrene | 253 |
| MAA | 23 |
| Mercapto ethanol | 23 |
| VAZO 64 | 45 |

The ICI viscosity for the resin is 30 poise at 200°C, AN 7.1 and tack temperature 194.5°F.

EXAMPLE 12

Grafted silicone acrylic powder resin.

The following monomers:

| | Grams |
|---|---|
| HPMA | 587 g. |
| MMA | 1140 g. |
| BA | 344 |
| Styrene | 253 |
| MAA | 23 |
| Mercapto ethanol | 23 |
| VAZO 64 | 45 |

were grafted onto 758 of silicone resin Z6018 in 750 g. of toluene. The grafting procedure in Example 5 was used. The ICI viscosity of the resin is 34 poise at 200°C, tack temperature is 184°F.

EXAMPLE 13

Grafted silicone acrylic powder resin.

Similar to example 12, the following silicone acrylic graft copolymer was prepared from grafting.

| | Grams |
|---|---|
| HPMA | 587 |
| MMA | 1140 |
| BA | 344 |
| Styrene | 253 |
| MAA | 23 |
| Mercapto ethanol | 23 |
| VAZO 64 | 45 |

onto 414 g. of silicone resin Z6018 in 750 g. of toluene.

EXAMPLE 14

Silicone-acrylic resin from HPMA and Dow-Corning liquid silicone resin - 3037, which is a methoxy functional low molecular weight silicone resin having a theoretical silicone content of 86.6% by weight and a methoxy content of 18.8% by weight. Theoretical silicone content is measured on a hydrolyzed basis with methoxy groups replaced by - Si - O - Si - linkages..

This resin is made similarly to that in Example 10. The ingredients used are:

| | Grams |
|---|---|
| Toluene | 750 |
| HPMA | 755 |
| MMA | 1068 |
| Styrene | 205 |
| BA | 296 |
| MAA | 23 |
| Mercapto ethanol | 23 |
| VAZO 64 | 45 |
| Silicone liquid resin DC 3037 | 758 |

The viscosity of the resin at 200°C was 13 poise, at 175°C was 54 poise and at 150°C, 172 poise. Tack temperature of resin is 171°F, AN 4.9.

**Paint Formulation**

**Typical Silicone-acrylic formulation**

**P/B = 0.6** **Ratio resin/XL = 67/33**

| | |
|---|---|
| Silicone acrylic resin | 804 |
| IPDI blocked with caprolactone Crosslinker | 396 |
| $TiO_2$ | 731 |
| (flow agent) | 12 |
| Benzoin | 6 |
| | 1949 |

**Silicone-Acrylic Powder and Film Properties**

| Ex. | Tack Temp. | Gel Time | GPC Min. | 1 day 40°C | Gloss 20/60 | Direct Impact | Texture | Hard-ness | MEK rub |
|---|---|---|---|---|---|---|---|---|---|
| 4 | 178F | 57 | 149 | 1 | 62/83 | 20 | 7 | 2H | 100+ |
| 5 | 181F | 48 | 121 | 1 | 27/67 | 20 | 6 | 2H | 100+ |
| 6 | 179F | 56 | 142 | 1 | 28/66 | 20 | 6 | 2H | 100+ |
| 8 | 184F | 69 | 120 | 7 | 62/84 | 20 | 6 | 2H | 100+ |
| 9 | — | — | — | 8 | 70/88 | 20 | 5 | 2H | — |
| 10 | — | — | — | 8 | 27/62 | 20 | 5 | H | — |

The following Examples 15-17 illustrate a further aspect of this invention based on copolymerization of glycidyl monomers in the presence of silicone resin.

EXAMPLE 15

Preparation of glycidylmethacrylate containing acrylic powder resin.

Into a 5-liter roundbottom 4 necked flask was charged 750 g. of toluene. Through the 4 necks were placed a monomer addition funnel, a water cooled condenser, an air driven stirring motor and nitrogen inlet. The toluene was heated to 108°C with a nitrogen blanket and a monomer composition of the following:

| | Grams |
|---|---|
| glycidyl methacrylate | 294 |
| methyl methacrylate | 570 |
| butyl acrylate | 172 |
| styrene | 127 |
| methacrylic acid | 12 |
| mercapto ethanol | 12 |
| VAZO 64 | 23 |

was slowly added to the following toluene in 3 hours. At the end of the monomer addition the temperature rose to 114°C. The reaction mixture was held for 3 hours at 114-116°C and then cooled for the night. The next morning, the reaction mixture was heated to 90°C and a vacuum of 23" of Hg was applied to strip off the solvent. When most of the solvent was stripped off, the resin was poured out onto aluminum foil. Viscosity of the resin on a ICI Cone and Plate viscometer at 200°C was 25 poise, tack temperature of resin was 177°F. Weight average molecular weight from gel permeation chromatography (GPC) was 33600 and the number average molecular weight was 4670.

EXAMPLE 16

Preparation of silicone-glycidyl methacrylate graft acrylic powder resin.

Into a 5-liter round bottom 4-necked flask was charged 750 g. of toluene and heated to 99°C with a nitrogen blanket. 379 g. of a solid silicone resin Z6018 (from Dow Corning Company, Midland Michigan), a hydroxy functional low molecular weight, silicone having a hydroxyl No. of 211, was added and dissolved in toluene.

A monomer mixture consisting of the following:

| | Grams |
|---|---|
| glycidyl methacrylate | 294 |
| methyl methacrylate | 570 |
| butyl acrylate | 178 |
| styrene | 133 |
| mercapto ethanol | 12 |
| Azobis polymerization initiator (VAZO 64) | 23 |

was added to the silicone resin solution at 109°-117°C. The monomer addition took about three hours, and 5.2 ml of water was collected. The reaction mixture was held at 117°C for three hours and then let cool overnight. The next morning the grafted reaction mixture was heated to about 108°C with 23" of vacuum, and most of the solvent was stripped off. The hot resin was then poured onto a sheet of aluminum foil. The tack temperature of the resin is 192°F, ICI cone and plate viscosity is 28 poise at 200°C, the nonvolatile is 100%.

EXAMPLE 17

Preparation of silicone-glycidyl methacrylate graft acrylic powder resin.

Into a 5-liter round bottom 4 necked flask was charged 750 g. of toluene and heated to 90°C with a nitrogen blanket. Then 379 g. of a solid silicone resin Z-6018 (from Dow Corning) was added and dissolved in toluene. The structure of the silicone resin is believed to be as shown on preceding page 5.
A monomer mixture consisting of the following:

| | Grams |
|---|---|
| glycidyl methacrylate | 294 |
| methyl methacrylate | 570 |
| butyl acrylate | 172 |
| styrene | 127 |
| methacrylic acid | 12 |
| VAZO 64 | 23 |

was added to the silicone resin at 106°C in 3 hours and the reaction mixture held at 114-116°C for 3 more hours, and then let cool over night. The next morning the grafted reaction mixture was heated to 100°C and a vacuum was applied to strip off solvent. The reaction was quite thick. The viscosity of the resin on the ICI

Cone and Plate viscometer at 200°C was erratic. The tack temperature of the resin was 220°F. The color of the graft copolymer is of a milky opalescent color vs. clear for the acrylic copolymer by itself.

The foregoing detailed description and illustrative examples indicate the principles of this invention based on in-situ copolymerization of ethylenic monomers including glycidyl monomers in the presence of silicone resin to produce an in-situ formed graft copolymer mixture, but is not intended to be limiting except by the appended claims.

## Claims

1. An acrylic-silicone polymeric composition useful as a polymeric binder in a protective surface coating, the polymeric composition comprising:
an in-situ formed polymeric mixture comprising on a weight basis between 30% and 90% acrylic copolymer and the balance being silicone resin, where said silicone resin has a number average molecular weight between 500 and 8000 and having an average of two or more silanol and/or methyl silane groups per silicone molecule, and where said acrylic copolymer is a copolymer of copolymerized ethylenically unsaturated monomers comprising by weight between 30% and 95% acrylic monomer and other ethylenically unsaturated monomers including (a) between 1% and 50% hydroxylated monomer or (b) between 1% and 50% glycidyl monomer, where the polymeric mixture is produced by copolymerizing said ethylenically unsaturated monomers in the presence of said silicone resin.

2. A composition according to claim 1, where the acrylic copolymer contains between 1% and 50% copolymerized hydroxylated monomer.

3. A composition according to claim 2, wherein the silicone resin contains on the average two or more silanol groups per silicone molecule.

4. A composition according to claim 2, wherein the silicone resin contains on the average two or more methoxyl silane groups per silicone molecule.

5. A composition according to any one of the preceding claims, where the acrylic copolymer contains between 1% and 50% copolymerized glycidyl monomer.

6. A process for producing acrylic modified silicone resin, the process steps comprising:
providing a silicone resin having a number average molecular weight above 500 and an average of mor than one silanol and/or methoxyl silane groups per silicone molecule; and
copolymerizing ethylenically unsaturated monomers in the presence of said silicone resin where said monomers comprise by weight based on the total weight of monomers copolymerized, between 30% and 95% acrylic monomer, and between 1% and 50% hydroxyl monomer or glycidyl monomer, and the balance being other ethylenically unsaturated monomers.

7. A process according to claim 6, wherein the silicone resin contains two or more silanol groups per silicone molecule.

8. A process according to either of claims 6 and 7, wherein the silicone resin contains two or more methoxyl silane groups per silicone molecule.

9. A process according to claim 8, wherein the silicone resin contains a mixture of silanol and methoxyl silane groups.

10. A process according to any one of claims 6-9, wherein the silicone resin is dispersed into an organic solvent and the monomers are in-situ copolymerized with the silicone resin dispersed in the solvent.

11. A process according to any one of claims 6-10, wherein the ethylenic monomers contain between 1% and 50% hydroxyl monomer.

12. A process according to any one of claims 6-11, wherein the ethylenic monomers contain between 1% and 8% glycidyl monomers.

13. A process according to claim 12, wherein between 0.1% and 50% organic diacid is added to the polymeric mixture based on the weight of polymeric solids.